(19) Europäisches Patentamt

European Patent Office

Office européen des brevets

(11) Veröffentlichungsnummer: **0 543 083 B1**

(12) **EUROPÄISCHE PATENTSCHRIFT**

(45) Veröffentlichungstag der Patentschrift: **06.12.95**

(21) Anmeldenummer: **92111302.3**

(22) Anmeldetag: **03.07.92**

(51) Int. Cl.⁶: **F16F 15/03**, F16F 7/10

(54) **Schwingungsdämpfer.**

(30) Priorität: **22.11.91 DE 4138405**

(43) Veröffentlichungstag der Anmeldung:
**26.05.93 Patentblatt 93/21**

(45) Bekanntmachung des Hinweises auf die
Patenterteilung:
**06.12.95 Patentblatt 95/49**

(84) Benannte Vertragsstaaten:
**DE ES FR GB IT NL SE**

(56) Entgegenhaltungen:
**EP-A- 0 002 697**
**DE-A- 2 051 911**
**DE-A- 3 620 302**
**DE-C- 3 918 753**
**GB-A- 2 192 041**

**PATENT ABSTRACTS OF JAPAN vol. 8, no.
174 (M-316)(1611) 10. August 1984 & JP-A-59
65 639 (NIPPON JIDOSHA BUHIN SOGO KEN-
KYUSHO KK) 13. April 1984**

**PATENT ABSTRACTS OF JAPAN vol. 12, no.
352 (M-744)(3199) 21. September 1988 & JP-
A-63 111 339 (HITACHI LTD) 16. MAI 1988**

**PATENT ABSTRACTS OF JAPAN vol. 11, no.**

**241 (M-614)(2688) 7. August 1987 & JP-A-62
52 235 (BRIDGESTONE CORP) 6. MÄRZ 1987**

**PATENT ABSTRACTS OF JAPAN vol. 13, no.
385 (M-864)(3733) 25. August 1989 & JP-A-01
135 943 (HITACHI PLANT ENG & CONSTR CO
LTD) 29 Mai 1989**

**PATENT ABSTRACTS OF JAPAN vol. 13, no.
385 (M-864)(3733) 25. August 1989 & JP-A-01
135 942 (HITACHI PLANT ENG & CONSTR CO
LTD) 29. Mai 1989**

(73) Patentinhaber: **Firma Carl Freudenberg
Höhnerweg 2-4
D-69469 Weinheim (DE)**

(72) Erfinder: **Weltin, Uwe, Dr.
Jahnstrasse 24
W-6149 Rimbach (DE)**
Erfinder: **Schilling, Hermann, Dr.
In der Dell 2
W-6940 Weinheim (DE)**

## Beschreibung

Die Erfindung betrifft einen Schwingungsdämpfer gemäß der Oberbegriffe der Ansprüche 1 und 2.

Ein solcher Schwingungsdämpfer ist aus der DE-OS 20 51 911 (Figur 2 gemäß Oberbegriff des Anspruchs 1, Fig. 1 gemäß Oberbegriff des Anspruchs 2) bekannt. Der Schwingungsdämpfer ist zur aktiven Unterdrückung von Schwingungen an Maschinen vorgesehen, wobei der Schwingungsdämpfer zumindest ein schwingfähiges Spulen-Magnet-System umfaßt. Der Magnet ist als Elektromagnet ausgebildet und in einem Gehäuse angeordnet, wobei jeweils die Spule oder der Magnet mit dem auf dem schwingenden Bauteil durch eine Befestigungsvorrichtung befestigten Gehäuse starr verbunden und der verbleibende, als seismische Masse wirkende Teil, demgegenüber beweglich angeordnet ist. Der Elektromagnet ist durch einen Spulenstrom entsprechend dem erforderlichen Verlauf der Gegenkräfte steuerbar. Das Gehäuse, das den Elektromagnet umschließt, ist mit einem Schwingungssensors und einem Regelverstärker versehen, wobei der Magnet eine zentrale, zur Spule koaxiale Bohrung aufweisen kann, mittels der er auf einem im Gehäuse angeordneten Führungsstift geführt wird.

Ein weiterer Schwingungsdämpfer ist aus der DE-PS 39 18 753 bekannt. Das vorbekannte Gummilager dämpft auftretende Schwingungen hydraulisch mit Hilfe einer auf einer Feder abgestützten Platte aus magnetisierbarem Werkstoff, die im Bereich eines flüssigkeitsgefüllten Arbeitsraumes angeordnet ist. Die magnetisierbare Platte ist auf einer Blattfeder abgestützt und wird in Abhängigkeit von vorgegebenen Parametern mit Hilfe eines Magnetsystems, bestehend aus Elektro- und Permanentmagnet hin und her verlagert. Das vorbekannte Gummilager ermöglicht eine wirksame Isolierung höherfrequenter Schwingungen im akustisch wirksamen Bereich in ausgezeichneter Weise, allerdings ist darauf zu achten, daß das Lager aus vielen zu montierenden Einzelteilen besteht, daher in wirtschaftlicher Hinsicht wenig befriedigend ist und überwiegend dann zur Anwendung gelangt, wenn genügend Einbauraum vorhanden ist.

Der Erfindung liegt die Aufgabe zugrunde ein solches Bauteil derart weiterzuentwickeln, daß sich ein wesentlich vereinfachter Aufbau mit weniger Einzelteilen ergibt, sowie eine größere Wirtschaftlichkeit bei deutlich verringertem Platzbedarf. Die wirkungsvolle Dämpfung akustisch wirksamer Schwingungen soll dadurch nicht beeinträchtigt werden.

Diese Aufgabe wird erfindungsgemäß bei einem Schwingungsdämpfer der eingangs genannten Art mit den Merkmalen der Ansprüche 1 und 2 gelöst. Auf vorteilhafte Ausgestaltungen nehmen die Unteransprüche Bezug.

Bei der Erfindung ist von Vorteil, daß der Schwingungsdämpfer im wesentlichen nur aus zwei Einzelteilen besteht, die durch einen Magnet und ein Federelement, auf dem der Magnet abgestützt ist, gebildet sind. Die vorteilhafte Anwendung eines derartigen Schwingungsdämpfers ist insbesondere dann gegeben, wenn die Schwingungsdämpfung an vorwiegend metallischen Strukturen erfolgen, und der Schwingungsdämpfer nicht im Kraftfluß des Bauteiles liegt, und durch seine Masse und Eigenfrequenz als Schwingungstilger wirkt. Derartige Metallstrukturen haben eine Vielzahl von Schwingungsformen mit unterschiedlichen Eigenfrequenzen, die durch Wechselkräfte angeregt werden und zu störenden Vibrationen und/oder Geräuschen führen. Der erfindungsgemäße Schwingungsdämpfer ermöglicht eine Schwingungsdämpfung in einem breiten Frequenzbereich.

Die Kombination eines Elektromagneten mit einer Feder erfolgt in der Weise, daß die statische Federkraft der Magnetkraft entgegengerichtet ist und daß im Gleichgewichtspunkt die dynamische Systemsteifigkeit einen Wert hat, der in Verbindung mit der Magnetmasse und einer eventuellen Zusatzmasse eine Eigenfrequenz bildet, die im Bereich der zu dämpfenden Störfrequenz liegt. Durch eine Veränderung der Stromstärke und somit der Magnetkraft kann die Tilgerfrequenz gesteuert werden. Eine Schwingungsdämpfung in einem breiten Frequenzbereich wird dadurch erreicht. Es ist vorgesehen, daß das zu dämpfende Bauteil gleichzeitig das Joch bildet, über das der magnetische Kraftfluß geschlossen wird. Eine separate Abschlußplatte als Rückschluß für den Elektromagneten ist dadurch entbehrlich. Die Magnetkraft ist abhängig vom Luftspalt zwischen dem Magnet und der Rückschlußplatte.

Eine der Magnetspulen kann zur Erzeugung einer statischem Kraft vorgesehen sein und die zweite Magnetspule bedingt die Erzeugung dynamischer Kräfte.

Mit Hilfe der zweiten Magnetspule wird dem statischen Fluß, der durch die erste Magnetspule erzeugt wird, ein veränderlicher Fluß überlagert, so daß im Luftspalt ein Wechselanteil der Kraft entsteht. Durch diese Kraft wird der Magnet aus seiner zunächst vorhandenen Gleichgewichtslage ausgelenkt und angetrieben. Die Hierzu erforderliche Wechselspannung wird der zweiten Magnetspule aus einer Versorgungseinheit zugeführt, welche beispielsweise unter Zuhilfenahme von Sensoren den zu dämpfenden Schwingungen entsprechend gesteuert ist.

Eine außerordentlich gute Einstellbarkeit des Schwingungsdämpfers auf die jeweiligen Gegebenheiten des Anwendungsfalles ist dadurch bedingt.

Insbesondere auf eventuell auftretende Relaxationserscheinungen des Federelementes kann durch Verwendung einer Magnetspule zur Erzeugung der statischen Kraft derart Einfluß genommen werden, daß bei nachlassender Werkstoff-Steifigkeit die aufgebrachte statische Kraft geringfügig reduziert werden kann, ohne daß größere Umbaumaßnahmen erforderlich werden.

Gemäß Anspruch 2 kann durch gleichsinnig gekrümmte Kennlinien von Magnetkraft und Feder eine sehr niedrige Eigenfrequenz eingestellt werden. Dabei ist allerdings zu beachten, daß ein derart ausgebildeter Schwingungsdämpfer zwar auf die jeweiligen Gegebenheiten des Anwendungsfalles abgestimmt werden kann, daß aber eine veränderbare Frequenz zur Dämpfung von Schwingungen mit veränderbaren Amplituden während des Betriebes nicht möglich ist.

In Abhängigkeit von der zu tilgenden Schwingung kann es erforderlich sein, daß dem Permanentmagnet eine Zusatzmasse zugeordnet ist.

Generell kann der erfindungsgemäße Schwingungsdämpfer auch derart ausgebildet sein, daß eine Platte zwischen zwei beiderseits benachbarten, auf den gegenüberliegenden Seiten der Platte jeweils schwingfähig gelagerten Magneten angeordnet ist.

Das Federelement kann durch eine im wesentlichen auf Druck beanspruchte Elastomerfeder, beispielsweise durch einen O-Ring, gebildet sein. Hierbei ist von Vorteil, daß O-Ringe preiswerte Bauteile darstellen, die in den verschiedensten Abmessungen auf dem Markt erhältlich sind. Die Verwendung von O-Ringen als Federelemente begünstigt die Wirtschaftlichkeit des erfindungsgemäßen Schwingungsdämpfers.

Der Gegenstand der vorliegenden Erfindung wird nachfolgend anhand der als Anlage beigefügten Zeichnungen weiter verdeutlicht. Es zeigen:

Figur 1 ein Ausführungsbeispiel des erfindungsgemäßen Schwingungsdämpfers, der einen Elektromagnet mit zwei Spulenkörpern umfaßt, wobei einer der Spulenkörper zur Erzeugung der statischen Kraft und einer der Spulenkörper zur Erzeugung der dynamischen Kraft vorgesehen ist.

Figuren 2 bis 4 jeweils einen Schwingungsdämpfer, der als Magnet einen Permanentmagnet aufweist, ohne daß die Magnetspule gezeigt ist.

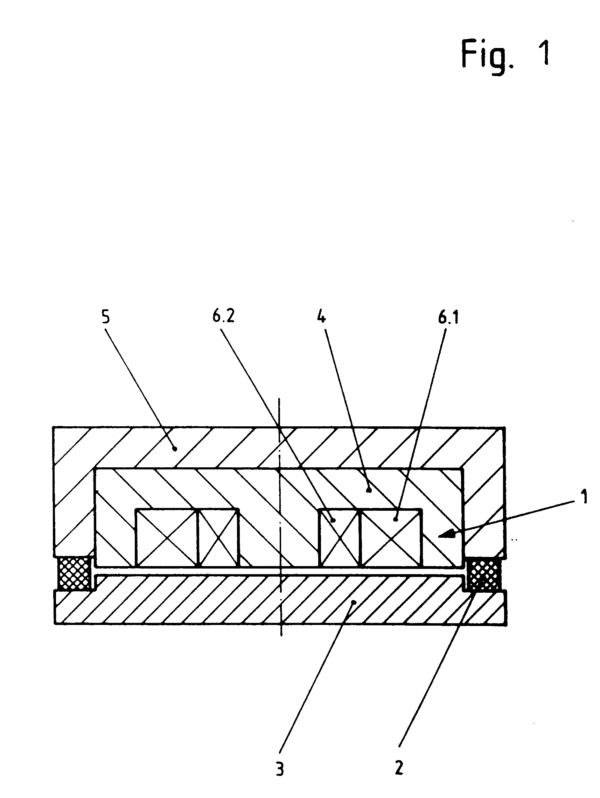

In Figur 1 ist ein magnetoelastischer Schwingungstilger gezeigt, der einen Elektromagnet 1.1 umfaßt, der durch zwei einander konzentrisch umschließende Magnetspule 6.1, 6.2 gebildet ist, die von einem sie umschließenden Spulenträger 4 aus Weicheisen teilweise umschlossen sind. Das Federelement 2 besteht aus elastisch nachgiebigem Werkstoff und ist in diesem Beispiel zwischen einer Zusatzmasse 5 und der Platte 3 (Rückschlußplatte) angeordnet. Die Zusatzmasse 5 und der Elektromagnet 1.1 sind einander in starrer Weise zugeordnet. Die beiden Magnetspulen 6.1, 6.2 sind unabhängig voneinander ansteuerbar. Eine der Magnetspulen 6.1 ist zur Erzeugung der statischen Vorspannkraft, die andere Magnetspule 6.2 zur Erzeugung der dynamischen Kräfte vorgesehen.

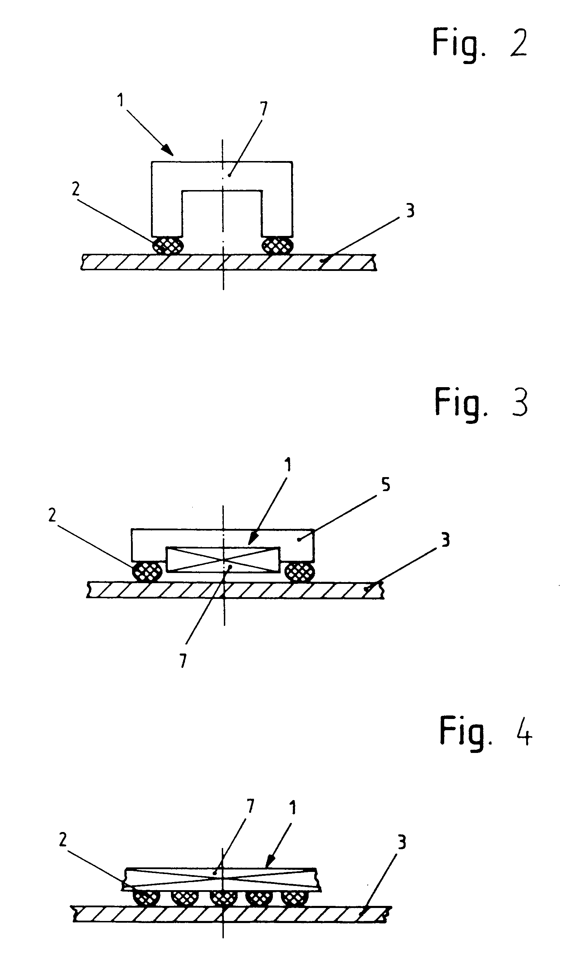

In den Figuren 2 bis 4 ist der Magnet als Permanentmagnet 7 ausgeführt und bildet die Tilgermasse, die zur Schwingungsdämpfung erforderlich ist. Der Permanentmagnet 7 wird selbsthaftend an dem zu bedämpfenden Bauteil 3 festgelegt. Diese Ausgestaltungen zeichnen sich durch einen besonders einfachen Aufbau aus. In Figur 3 ist als Federelement 2 ein O-Ring vorgesehen, der zwischen einer Zusatzmasse 5 und der Platte 3 angeordnet ist. Die Zusatzmasse 5 nimmt den Permanentmagnet 7 auf und ist diesem in starrer Weise zugeordnet. In Figur 4 ist das Federelement durch mehrere halbkugelförmige Gumminoppen gebildet.

## Patentansprüche

1. Schwingungsdämpfer, umfassend einen Magnet (1) mit einer Trägheitsmasse m, der auf einem Federelement (2) angeordnet und unter Zwischenfügung des Federelements (2) an einer Platte (3) gehalten ist, die eine Störfrequenz $\omega_1$ aufweist, wobei die elastischen Eigenschaften des Magnets (1) $c_1$ und des Federelements (2) $c_2$ einander ergänzen, wobei die Trägheitsmasse m des Magnet (1) und die elastischen Eigenschaften des Magnets (1) $c_1$ einschließlich des Federelements (2) $c_2$ unter Zugrundelegung der Formel

$$\omega_0 = \sqrt{c_{ges}/m} \,,$$

worin $c_{ges}$ die summierten Federelastizitäten beschreibt und m die Trägheitsmasse, so abgestimmt sind, daß die sich ergebende Resonanzfrequenz $\omega_0$ mit der Störfrequenz $\omega_1$ der Platte (3) im wesentlichen übereinstimmt und wobei der Magnet (1) als Elektromagnet ausgebildet ist, umfassend zumindest eine Magnetspule und einen Spulenträger (4) aus Weicheisen, dadurch gekennzeichnet, daß der Magnet (1) zwei Magnetspulen (6.1, 6.2) umfaßt, die konzentrisch zueinander im Spulenträger (4) angeordnet und unabhängig voneinander ansteuerbar sind, daß die Magnetspulen 6.1, 6.2 in einer zur Platte (3) offenen Nut des Spulenträgers (4) angeordnet sind, daß die Platte (3) aus magnetisierbarem Material besteht und gewährleistet ist, daß die Platte (3) einen magnetischen Rückschluß für den Magnet (1) bildet, daß der gesamte Elektromagnet in jedem Betriebszustand relativ zu der Platte (3) bewegbar ist und daß das Federelement aus elastisch nachgiebigem Werkstoff besteht.

2. Schwingungsdämpfer, umfassend einen Magnet (1) mit einer Trägheitsmasse m, der auf einem Federelement (2) aus elastisch nachgiebigem Werkstoff angeordnet und unter Zwischenfügung des Federelements (2) an einer Platte (3) gehalten ist, die eine Störfrequenz $\omega_1$ aufweist, wobei die elastischen Eigenschaften des Magnet (1) $c_1$ und des Federelements (2) $c_2$ einander ergänzen und wobei der Magnet (1) in jedem Betriebszustand relativ zu der Platte (3) bewegbar ist, wobei die Trägheitsmasse m des Magnet (1) und die elastischen Eigenschaften des Magnet (1) $c_1$ einschließlich des Federelements (2) $c_2$ unter Zugrundelegung der Formel

$$\omega_0 = \sqrt{c_{ges}/m},$$

worin $c_{ges}$ die summierten Federelastizitäten beschreibt und m die Trägheitsmasse, so abgestimmt sind, daß die sich ergebende Resonanzfrequenz $\omega_0$ mit der Störfrequenz $\omega_1$ der Platte (3) im wesentlichen übereinstimmt, wobei der Magnet (1) als Permanentmagnet (7) ausgebildet ist und eine Tilgermasse aufweist, dadurch gekennzeichnet, daß der Magnet zusätzlich eine mit der Trägheitsmasse in mitbewegte, aktivierbare Magnetspule aufweist, die Platte (3) aus magnetisierbarem Material besteht und gewährleistet ist, daß die Platte (3) einen magnetischen Rückschluß für den Magnet (1) bildet und daß im nichtaktivierten Zustand der Magnetspule der Permanentmagnet (7) unter Vorspannung des Federelements (2) haftend an der zu dämpfenden Platte (3) festgelegt ist.

3. Schwingungsdämpfer nach Anspruch 2, dadurch gekennzeichnet, daß dem Permanentmagnet (7) in Abhängigkeit von der zu tilgenden Schwingung eine Zusatzmasse (5) zugeordnet ist.

4. Schwingungsdämpfer nach einem der Ansprüche 1 bis 3, dadurch gekennzeichnet, daß das Federelement (2) durch eine im wesentlichen auf Druck beanspruchte Elastomerfeder gebildet ist.

5. Schwingungsdämpfer nach Anspruch 4, dadurch gekennzeichnet, daß die Elastomerfeder durch einen O-Ring gebildet ist.

**Claims**

1. A vibration damper, comprising a magnet (1) having an inertia mass m which is arranged on a spring element (2) and is held on a plate (3) with the interposition of the spring element (2), which plate (3) has a disturbance frequency $\omega_1$, the elastic properties of the magnet (1) $c_1$ and of the spring element (2) $c_2$ supplementing one another, the inertia mass m of the magnet (1) and the elastic properties of the magnet (1) $c_1$, including the spring element (2) $c_2$, being matched on the basis of the formula

$$\omega_0 = \sqrt{c_{ges}/m},$$

where $c_{ges}$ describes the total spring elasticities and m the inertia mass, such that the resultant resonant frequency $\omega_0$ coincides substantially with the disturbance frequency $\omega_1$ of the plate (3), and the magnet (1) being designed as an electromagnet comprising at least one magnet coil and one coil former (4) made of soft iron, characterized in that the magnet (1) comprises two magnet coils (6.1, 6.2) which are arranged concentrically with respect to one another in the coil former (4) and can be driven independently of one another, in that the magnet coils (6.1, 6.2) are arranged in a groove in the coil former (4), which groove is open to the plate (3), in that the plate (3) is composed of material which can be magnetized and it is ensured that the plate (3) forms a magnetic return path for the magnet (1), in that the entire electromagnet can move relative to the plate (3) in any operating state, and in that the spring element is composed of elastically flexible material.

2. A vibration damper, comprising a magnet (1) having an inertia mass m which is arranged on a spring element (2) composed of elastically flexible material and is held on a plate (3) with the interposition of the spring element (2), which plate (3) has a disturbance frequency $\omega_1$, the elastic properties of the magnet (1) $c_1$ and of the spring element (2) $c_2$ supplementing one another, and the magnet (1) being movable relative to the plate (3) in any operating state, the inertia mass m of the magnet (1) and the elastic properties of the magnet (1) $c_1$, including the spring element (2) $c_2$, being matched on the basis of the formula

$$\omega_0 = \sqrt{c_{ges}/m},$$

where $c_{ges}$ describes the total spring elasticities and m the inertia mass, such that the resultant resonant frequency $\omega_0$ coincides substantially with the disturbance frequency $\omega_1$ of the plate (3), and the magnet (1) being designed as a permanent magnet (7) and having a damping mass, characterized in that the magnet additionally has a magnet coil which can be activated and moves with the inertia mass m, the plate (3) is composed of material which can be magnetized and it is ensured that the plate (3) forms a magnetic return path for the magnet (1), and in that, when the magnet coil is in the unactivated state, the permanent magnet (7) is fixed to the plate (3) which is to be damped, in an adhering manner, with the spring element (2) being prestressed.

3. A vibration damper according to claim 2, characterized in that an additional mass (5) is assigned to the permanent magnet (7) as a function of the vibration to be damped.

4. A vibration damper according to any one of claims 1 to 3, characterized in that the spring element (2) is formed by an elastomer spring which is stressed substantially in compression.

5. A vibration damper according to claim 4, characterized in that the elastomer spring is formed by an O-ring.

**Revendications**

1. Amortisseur de vibrations, comportant un aimant (1) ayant une masse d'inerte m, qui est disposé sur un élément élastique (2) et est tenu, en intercalant l'élément élastique (2), sur une plaque (3) qui présente une fréquence perturbatrice $\omega_1$, les propriétés élastiques de l'aimant (1) $c_1$ et de l'élément élastique (2) $c_2$ se complétant mutuellement, la masse d'inertie m de l'aimant (1) et les propriétés élastiques de l'aimant (1) $c_1$, y compris celles de l'élément élastique (2) $c_2$, étant ajustées sur la base de la formule

$$\omega_0 = \sqrt{c_{ges}}/m,$$

où $c_{ges}$ est la somme des élasticités et m la masse d'inertie, de manière à ce que la fréquence de résonance $\omega_0$ résultante corresponde essentiellement à la fréquence perturbatrice $\omega_1$ de la plaque (3), et l'aimant se présentant sous forme d'amant comprenant au moins une bobine d'électro-aimant et un porte-bobine (4) en fer doux, caractérisé en ce que l'aimant (1) comprend deux bobines d'amant (6.1, 6.2) qui sont disposées dans le porte-bobine concentriquement l'une par rapport à l'autre et peuvent être excitées indépendamment l'une de l'autre, en ce que les bobines d'aimant (6.1, 6.2) sont disposées dans une rainure du porte-bobine (4) ouverte vers la plaque (3), en ce que la plaque (3) est en matériau aimantable et qu'il est garanti que la plaque (3) forme un court-circuit magnétique pour l'aimant (1), en ce que l'électro-aimant dans son ensemble est mobile par rapport à la plaque (3) dans chaque état de fonctionnement et en ce que l'élément élastique (2) est composé d'un matériau élastique souple.

2. Amortisseur de vibrations, comportant un aimant (1) ayant une masse d'inertie m, qui est disposé sur un élément élastique (2) en matériau élastique souple et est tenu, en intercalant l'élément élastique (2), sur une plaque (3) qui présente une fréquence perturbatrice $\omega_1$, les propriétés élastiques de l'aimant (1) $c_1$ et de l'élément élastique (2) $c_2$ se complétant mutuellement et l'aimant (1) étant mobile par rapport à la plaque (3) dans chaque état de fonctionnement, la masse d'inertie m de l'aimant (1) et les propriétés élastiques de l'aimant (1) $c_1$, y compris celles de l'élément élastique (2) $c_2$ étant ajustées sur la base de la formule

$$\omega_0 = \sqrt{c_{ges}}/m,$$

où $c_{ges}$ est la somme des élasticités de l'élément élastique et m la masse d'inertie, de manière à ce que la fréquence de résonance $\omega_0$ résultante corresponde essentiellement à la fréquence perturbatrice $\omega_1$ de la plaque (3), l'aimant (1) se présentant sous forme d'amant permanent (7) et comportant une masse d'amortissement, caractérisé en ce que l'aimant comporte en plus une bobine d'aimant qui suit le mouvement de la masse d'inerte m et est apte à être activée, que la plaque (3) est en matériau aimantable et qu'il est garanti que la plaque (3) forme un court-circuit magnétique pour l'aimant (1) et en ce que, lorsque la bobine d'aimant est en état non activé, l'aimant permanent (7) est fixé sur la plaque (3) à amortir par précontrainte de l'élément élastique (2).

3. Amortisseur de vibrations selon la revendication 2, caractérisé en ce qu'une masse additionnelle (5) est associée à l'aimant permanent (7) en fonction de la vibration à amortir.

4. Amortisseur de vibrations selon l'une quelconque des revendications 1 à 3, caractérisé en ce que l'élément élastique (2) est formé par un ressort d'élastomère sollicité essentiellement en compression.

5. Amortisseur de vibrations selon la revendication 4, caractérisé en ce que le ressort d'élastomère est formé par un joint torique.

# Fig. 1

Fig. 2

Fig. 3

Fig. 4